# EUROPÄISCHE PATENTANMELDUNG

(11) **EP 3 637 144 A1**
(43) Veröffentlichungstag der Anmeldung: **15.04.2020**
(21) Anmeldenummer: 18199529.1
(22) Anmeldetag: 10.10.2018
(51) Int. Cl.: G01S 17/93, G01S 7/481, G01S 13/93, H01Q 3/02, H01Q 1/42, G01S 7/497, G01S 7/40, G01S 7/02

(54) **FAHRZEUGUMFELDSENSOR MIT BEWEGLICHER SENSOREINHEIT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Sensorsystem (200, 300, 400) für ein Kraftfahrzeug umfassend ein Sensorgehäuse und einen darin angeordneten und an einer bewegbaren Sensorhalterung (201, 401) gehaltenen aktiven oder passiven Sensor (102) mit einer auf Strahlungsdetektion beruhenden Sensorik sowie einer dem Sensor (102) zugeordneten Messeinrichtung und einer mit dieser gekoppelten Steuerungseinrichtung für die Sensorhalterung (201, 401), wobei das Sensorgehäuse auf seiner in Detektionsrichtung des Sensors (102) befindlichen Seite eine für den Sensor (102) signaldurchlässige Abdeckung (106, 301) aufweist und wobei der Erfassungsbereich (108, 109) des Sensors (102) im Bereich der signaldurchlässigen Abdeckung (106, 301) eine geringere Ausdehnung besitzt als die signaldurchlässige Abdeckung (106, 301), wobei das Sensorsystem (200, 300, 400) dadurch gekennzeichnet ist, dass die Messeinrichtung derart ausgebildet ist, dass sie geeignet ist, im Erfassungsbereich des Sensors (102) zu überprüfen, ob und in welchem Abschnitt die signaldurchlässige Abdeckung (106, 301) einen Bereich mit verringerter Signaldurchlässigkeit (202) aufweist, wobei die Messeinrichtung mit der Steuerungseinrichtung in der Weise zusammenwirkt, dass die Steuerungseinrichtung die Position des Sensors (102) in der Weise verändern kann, dass der Bereich mit verringerter Signaldurchlässigkeit (202) außerhalb des Erfassungsbereichs (108, 109) des Sensors (102) liegt. Die Erfindung betrifft ferner ein Verfahren zum Betreiben eines solchen Sensorsystems (200, 300, 400) sowie ein Kraftfahrzeug, welches mit einem derartigen Sensorsystem (200, 300, 400) ausgerüstet ist.

## Beschreibung

Die Erfindung betrifft ein Sensorsystem für ein Kraftfahrzeug umfassend ein Sensorgehäuse und einen darin angeordneten und an einer bewegbaren Sensorhalterung gehaltenen aktiven oder passiven Sensor mit einer auf Strahlungs- oder Schallwellendetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung. Die Erfindung betrifft ferner ein Verfahren zum Betreiben eines solchen Sensorsystems sowie ein Kraftfahrzeug, welches mit einem derartigen Sensorsystem ausgerüstet ist.

Fahrerassistenzsysteme sind Einrichtungen im Kraftfahrzeug, die zur Steigerung des Fahrkomforts und der Sicherheit dienen. Fortschrittliche Fahrerassistenzsysteme ermöglichen sogar hoch automatisiertes und autonomes Fahren. Bei solchen teil- und vollautonomen Fahrzeugen werden besonders hohe Anforderungen an die Funktion der Umfeldsensoren gestellt. Sie basieren z.B. auf digitaler Kamera-, Radar- und Lidar-Technik. Kameras sind kompakte optische Systeme mit Photozellen, die hochaufgelöste Bilder der Umgebung erfassen. Radar- (Radio Detection and Ranging) und Lidar-Sensoren (Light Detection And Ranging), seltener auch Ladar genannt (Laser Detection and Ranging), bilden zusammen mit den Kameras und ggf. weiteren Sensortypen einen digitalen Sensorverbund, der auf Datenfusion und hoher Signalredundanz aufbaut. Durch präzise Objekterkennung, Objektklassifizierung und die Erzeugung digitaler Umgebungskarten in Echtzeit macht das Sensorsystem sicheres autonomes Fahren bei unterschiedlichen Fahr-, Straßen- und Wetterbedingungen möglich.

Funktionierende, ausfallsichere Sensoren sind die Grundvoraussetzung für teil- und vollautonomes Fahren. Eine wesentliche technische Aufgabe dabei ist es, die Funktion des Sensors, der hinter einer durch Witterungs- und Gebrauchseinflüsse verschmutzten oder beschädigten Sensorschutzabdeckung sitzt, zu erhalten.

Verschmutzung entsteht z.B. durch von der Straße aufgewirbelten fest sitzenden Staub, Insekten, Vogelkot, Schneematsch, angetrocknetes Schmutzwasser, sowie jede Art von Partikeln oder Flüssigkeiten. Verschmutzung kann z.B. ebenso durch Staub, sowie jede Art von Partikeln oder Flüssigkeiten entstehen, die sich an der Innenseite der Sensorschutzabdeckung festsetzen. Zur Schädigung der Sensorschutzabdeckung zählt man z.B. Abrieb, Kratzer, Erosion, Risse, Absplitterungen, Deformation, Quellung, Trübung und Verfärbung, entweder in der flächigen Abdeckung des Scheibenkörper selbst oder in mindestens einer seiner Komponenten, z.B. Lackschicht, Klebeschicht oder Dekorelement. Verschmutzungen und Schädigungen führen dazu, dass die vom Sensor zu detektierenden elektromagnetischen Wellen, ebenso wie die emittierten Wellen (je nach Typ Infrarotlicht, Funk- oder Mikrowellen) durch Absorption, Reflexion oder Streuung gedämpft oder abgelenkt werden. Dies kann zu unterschiedlichem sensorischen Fehlverhalten führen, insbesondere zu partiellem bis vollständigem Signalausfall, Verlust an Sensorreichweite, Verlust an Ortsauflösung, Fehlern in der Objekterkennung und im Geschwindigkeitsvectoring.

Im Stand der Technik finden sich Maßnahmen zur Reinigung verschmutzter Sensorabdeckungen. So ist in der DE 10 2010 055 113 A1 eine Reinigungsvorrichtung mit zumindest einer Spritzdüse beschrieben, die eine Reinigungsflüssigkeit mit hohem Druck auf mindestens eine der Sensorschutzabdeckungen spritzt und in Verbindung mit einer Heizung für die Flüssigkeit eine hohe Reinigungsleistung auch bei kalten Temperaturen erzielt.

In der US 2015/0090291 sind zusätzlich Wischer beschrieben, die die Scheibe vor dem Sensor reinigen können.

In der DE 10 2013 207 482 A1 sind beheizbare Flächenelemente beschrieben, die insbesondere zum Aufheizen von Radarabdeckungen dienen. Durch Aufheizen der Abdeckung können Schmutz und Beläge aus Eis und Schnee an- und abgetaut und Feuchtigkeit reduziert werden, was zu einer verbesserten Durchlässigkeit der Radarwellen führt.

Im Stand der Technik finden sich Software basierte Lösungen für den Umgang mit Signalverlust in sog. blinden Sensoren, oder mit nicht eindeutigen Sensorsignalen. Die US 2010/0235129 beschreibt die Korrelation von Signalen mehrerer Sensoren (Sensorfusion), wodurch der autonome Betrieb eines Fahrzeugs auch bei fehlenden, nicht zuordenbaren oder nicht eindeutigen Sensorsignalen aufrechterhalten werden kann.

Die DE 199 45 268 A1 beschreibt ein ähnliches Verfahren und eine Vorrichtung zur Erkennung des Sensorszustands hinsichtlich Verschmutzung und Blindheit. Dies sind kostengünstige Lösungen, weil sie Teil der elektronischen Sensorintelligenz sind.

Im Stand der Technik findet sich keine Lehre zum Handeln über die innersensorische Korrektur von Störungen in Folge üblichen Gebrauchsverschleißes der Sensorschutzabdeckung oder anderweitiger Schädigung derselben, hervorgerufen durch äußere mechanische oder witterungsbedingte Einwirkung. Die angeführten Beispiele zur Sensorintelligenz und Sensorfusion können nur die Wirkung eines Signalverlusts im Sensorverbund, aber nicht die Ursache des Signalausfalls beseitigen, und damit bleibt ein erhöhtes Sicherheitsrisiko in Verbindung mit dem autonomen Fahren verbunden.

Die Aufgabe der vorliegenden Erfindung bestand somit darin, ein Sensorsystem für ein Kraftfahrzeug zur Verfügung zu stellen, welches im Falle einer die Funktionsweise des Sensors beeinträchtigenden Verschmutzung oder lokal begrenzten Beschädigung der Sensorschutzabdeckung selbsttätig in der Lage ist, die Funktionsweise des Sensors wieder herzustellen, ohne dass der Sensor dafür ausgetauscht oder repariert werden muss. Mit anderen Worten ist es ein wesentlicher Gedanke der Erfindung, Sender und/oder Empfänger auf einer beweglichen Einheit zu fixieren und diese Einheit im Falle, dass ein Defekt das eingehende und/oder ausgehende Signale stört, gezielt neu auszurichten, so dass das entsprechende Signal am Defekt vorbei gelenkt wird.

Die erfindungsgemäße bewegliche Einheit dient also insbesondere dazu, die jeweilige Komponente - Sender und/oder Empfänger - innerhalb des Gehäusemoduls neu auszurichten, so dass es durch eine gezielte laterale Verschiebung und/oder Rotation gelingt,
a) ausgesandte Signale an einer anderen, defektfreien Stelle durch die Sensorschutzabdeckung zu schicken bzw.
b) den Empfänger so zu positionieren, dass er eingehende Signale störungsfrei erfassen kann.

Die erfindungsgemäße bewegliche Einheit ist beispielsweise als mechanische Verschiebe- oder Dreheinheit ausgelegt, die in einer bevorzugten Ausführungsform fest mit dem Gehäusemodul verbunden ist.

Die Aufgabe wurde bei einem Sensorsystem der eingangs genannten Art dadurch gelöst, dass der Sensor bewegbar gehalten und mit einer Messeinrichtung in der Weise gekoppelt ist, dass der Sensor mittels einer Steuerungseinrichtung im Falle der Feststellung einer Beschädigung an eine andere Position verfahren werden kann, in der der Sensor außerhalb des Einflussbereichs der Beschädigung arbeiten kann.

Die Erfindung betrifft somit ein Sensorsystem für ein Kraftfahrzeug umfassend ein Sensorgehäuse und einen darin angeordneten und an einer bewegbaren Sensorhalterung gehaltenen aktiven oder passiven Sensor mit einer auf Strahlungsdetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Sensorsystem dadurch gekennzeichnet ist, dass die Messeinrichtung derart ausgebildet ist, dass sie geeignet ist, im Erfassungsbereich des Sensors zu überprüfen, ob und in welchem Abschnitt die signaldurchlässige Abdeckung einen Bereich mit verringerter Signaldurchlässigkeit aufweist, wobei die Messeinrichtung mit der Steuerungseinrichtung in der Weise zusammenwirkt, dass die Steuerungseinrichtung die Position des Sensors in der Weise verändern kann, dass der Bereich mit verringerter Signaldurchlässigkeit außerhalb des Erfassungsbereichs des Sensors liegt.

Nach einer bevorzugten Ausführungsform des erfindungsgemäßen Sensorsystems ist der Sensor ausgewählt aus Radarsensoren, Lichtsensoren, insbesondere Lidar-Sensoren auf Basis von Lasern oder Leuchtdioden und Bilderfassungssensoren, wie sie beispielsweise in Rückfahr-, Front oder Umfeldkameras verwendet werden.

Der Sensor kann über eine Sendeeinrichtung und eine hiervon getrennte Empfangseinrichtung verfügen, wobei die Sendeeinrichtung und/ oder die Empfangseinrichtung an der bewegbaren Sensorhalterung befestigt ist oder die Sendeeinrichtung und die Empfangseinrichtung jeweils separat an bewegbaren Sensorhalterungen befestigt sind. Die Sensorhalterung ist bevorzugt in alle Raumrichtungen verfahrbar, um sämtliche Achsen drehbar und/ oder kippbar ausgestaltet. Hierdurch kann das System sehr flexibel verstellt werden, um Bereiche mit verringerter Signaldurchlässigkeit zu umgehen und die Funktionsfähigkeit des Sensors aufrechtzuerhalten.

Die Bewegung der Sensorhalterung kann beispielsweise durch wenigstens einen der Sensorhalterung zugeordneten Elektromotor, ein piezoelektrisches Element, oder ein hydraulisches Element erfolgen. Die Sensorhalterung kann ferner am Sensorgehäuse fixiert sein, insbesondere auf der der signaldurchlässigen Abdeckung gegenüberliegenden Fläche des Sensorgehäuses. Die Fixierung hält dabei den Sensor nicht ortsfest, sondern ist derart ausgestaltet, dass sie dieser die vorgenannten Möglichkeiten der Verstellbarkeit erlaubt. Insbsondere kann die Bewegung der Sensorhalterung über einen Riemenantrieb, insbesondere einen Keilriemenantrieb, einen Schiebeschlitten, eine Drehvorrichtung, wie beispielsweise einen Drehteller oder auch in einer kardianischen Aufhängung mittels geeigneter Antriebe erfolgen.

Die Prüfung, ob und in welchem Abschnitt die signaldurchlässige Abdeckung einen Bereich mit verringerter Signaldurchlässigkeit aufweist, kann im Prinzip auf jede dem Fachmann zu diesem Zweck bekannte Weise erfolgen, vorzugsweise mittels einer der Messeinrichtung zugeordneten Recheneinheit. Hierzu kann die Recheneinheit mit einem Datenverarbeitungsprogramm betreibbar ausgestaltet sein, mittels welchem die Prüfung, ob und in welchem Abschnitt die signaldurchlässige Abdeckung einen Bereich mit verringerter Signaldurchlässigkeit aufweist, über eine Differenzbilderkennung unter Einsatz desselben Sensors oder verschiedener Sensoren vorgenommen werden, wobei bei Einsatz verschiedener Sensoren insbesondere eine Sensorfusion eingesetzt wird. Ein geeignetes Verfahren für eine Sensorfusion ist beispielsweise in US 2010/0235129 A offenbart.

Vorzugsweise ist die Steuerungseinrichtung derart ausgestaltet, dass sie nach einer Positionsänderung des Sensors diese neue Position an das Bordnetz des Fahrzeugs weitergibt, sodass dort eine Umrechnung der vom Sensor gelieferten Daten in der Weise erfolgen kann, dass die neue Sensorposition im Vergleich zur ursprünglichen Sensorposition als Korrekturgröße einbezogen wird. Die Umrechnung der neuen Position kann aber auch in der Recheneinheit des Sensorsystems erfolgen, sodass bereits positionskorrigierte Signale vom Sensorsystem an das Bordnetz des Fahrzeugs gesendet werden können.

Die Messeinrichtung und die Steuerungseinrichtung können unabhängig voneinander innerhalb oder außerhalb des Sensorgehäuses positioniert sein. In einigen Fällen kann es bevorzugt sein, die Messeinrichtung und die Steuerungseinrichtung innerhalb des Sensorgehäuses anzuordnen weil hierdurch die gesamte Einheit ein Bauteil bildet und abgesehen von der Energieversorgung und der Anbindung an das Datennetz des Fahrzeugs keine zusätzlichen Leitungen durch das Sensorgehäuse geführt werden müssen, was möglicherweise zu Dichtigkeitsproblemen führen könnte.

Nach einer bevorzugten Ausgestaltung des erfindungsgemäßen Sensorsystems ist die Messeinrichtung so ausgestaltet, dass diese ein Fehlersignal ausgeben kann, für den Fall, dass die Position des Sensors nicht in der Weise veränderbar ist, dass der Bereich mit verringerter Signaldurchlässigkeit außerhalb des Erfassungsbereichs des Sensors liegt. Dieses Fehlersignal kann an die Bordelektronik des Fahrzeugs weitergeleitet werden und dort einen Fehlercode auslösen, der die Notwendigkeit des Austauschs des Sensors und/oder dessen nicht ordnungsgemäße Funktionsweise anzeigt, damit sich der Fahrzeugnutzer nicht auf einen defekten Sensor verlässt und es zu einer Fahrzeugbeschädigung oder dergleichen kommt.

Das Sensorsystem ist weiter bevorzugt derart ausgestaltet, dass die Prüfung, ob und in welchem Abschnitt die signaldurchlässige Abdeckung einen Bereich mit verringerter Signaldurchlässigkeit aufweist, beim Einschalten des Sensorsystems und /oder in frei wählbaren zeitlichen Intervallen durchführbar ist. Dadurch ist sichergestellt, dass der Sensor in regelmäßigen Abständen überprüft und dessen Funktionstätigkeit sichergestellt ist.

Das erfindungsgemäße Sensorsystem kann ferner so angelegt sein, dass zwischen dem Sensor und der signaldurchlässigen Abdeckung eine signaldurchlässige innere Schutzabdeckung vorgesehen ist, welche sich vorzugsweise bis an die seitlichen Innenwände der Gehäuseabdeckung erstreckt. Auf diese Weise kann der innenliegende Sensor vor schädigenden Einflüssen selbst dann geschützt bleiben, wenn die signaldurchlässige Abdeckung beispielsweise einen Riss oder ein Loch aufweist.

Die signaldurchlässige Abdeckung und/ oder die signaldurchlässige innere Schutzabdeckung können aus einem transparenten Kunststoff oder Glas aufgebaut sein, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen. Besonders bevorzugt sind hier auf Grund ihrer optischen und mechanischen Eigenschaften Polycarbonat und Polymethylmethacrylat, ganz besonders wegen des extrem zähen Verhaltens Polycarbonat.

Ein weiterer Gegenstand der vorliegenden Erfindung betrifft ein Verfahren zum Betreiben eines Sensorsystems für ein Kraftfahrzeug umfassend ein Sensorgehäuse und einen darin angeordneten und an einer bewegbaren Sensorhalterung gehaltenen aktiven oder passiven Sensor mit einer auf Strahlungsdetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Verfahren dadurch gekennzeichnet ist, dass mittels der Messeinrichtung geprüft wird, ob und in welchem Abschnitt des Erfassungsbereichs des Sensors die signaldurchlässige Abdeckung einen Bereich mit verringerter Signaldurchlässigkeit aufweist, und falls ein Bereich mit verringerter Signaldurchlässigkeit detektiert wird, die Position des Sensors mittels der Steuerungseinrichtung in der Weise verändert wird, dass der Bereich mit verringerter Signaldurchlässigkeit außerhalb des Erfassungsbereichs des Sensors liegt.

Nach einer bevorzugten Weiterbildung des erfindungsgemäßen Verfahrens ist ein Bereich mit verringerter Signaldurchlässigkeit dadurch definiert, dass in einer zusammenhängenden Fläche von wenigstens 1 % des Erfassungsbereichs des Sensors auf der signaldurchlässigen Abdeckung eine Dämpfung des über die Sensorik zu detektierenden Signals von wenigstens 5 %, verglichen mit der übrigen Fläche der signaldurchlässigen Abdeckung im Erfassungsbereich des Sensors, auftritt.

Die Erfindung betrifft ferner ein Fahrzeug, insbesondere Kraftfahrzeug, das mit wenigstens einem erfindungsgemäßen Sensorsystem ausgerüstet ist. Das Sensorsystem kann beispielsweise im Front-, Heck-, oder Seitenbereich eines Fahrzeugs eingesetzt werden, z.B. im Stoßfänger, Kühlergrill, Scheinwerfer, Frontpanel, Heckpanel, Rücklicht, Dachsäule, Scheibe oder Anbauteil, wie z.B. Außenspiegel. Das Sensorsystem kann in eine Öffnung eines Karosserieaußenteils eingebaut sein. Bevorzugt ist das Sensorsystem nahtlos in die Fahrzeugteiloberfläche integriert. Besonders bevorzugt ist das Karosserieaußenteil zugleich die Sensorschutzabdeckung. Die Positionierung der Sensoren hinter Karosseriebauteilen hat mehrere Vorteile gegenüber frei stehenden Sensoren, insbesondere ästhetische, aerodynamische und reparaturtechnische Vorteile. Als Sensorsysteme kommen vor allem solche mit einer sogenannten ADAS-Funktionalität (= Advanced Driver Assistance Systems) in Betracht. Dies sind beispielsweise Lidar-Sensoren, Scannende Lidar-Sensoren, Flash-Lidar-Sensoren, GHz- und THz-Radare für Nahfeld bis Fernfelderkennung, Kameras für das sichtbare bzw. infrarote Wellenlängenspektrum. Ein mögliches bevorzugtes Anwendungsgebiet ist die 360° Umfelderkennung für hoch automatisiertes und autonomes Fahren. Weiteres Aufgabengebiet: Im Stand können diese ADAS-Sensoren für den Endkunden relevante Komfortfunktionen leisten, z.B. mechatronische Komfortfunktionen wie Systeme zum berührungslosen Öffnen und Schließen von Türen und Heckklappen, oder z.B. licht- und anzeigenbasierte Komfortfunktionen.

Die Erfindung betrifft insbesondere die folgenden Ausführungsformen:
Nach einer ersten Ausführungsform betrifft die Erfindung ein Sensorsystem 200, 300, 400 für ein Fahrzeug, insbesondere Kraftfahrzeug, umfassend ein Sensorgehäuse und einen darin angeordneten und an einer bewegbaren Sensorhalterung 201, 401 gehaltenen aktiven oder passiven Sensor 102 mit einer auf Strahlungsdetektion beruhenden Sensorik sowie einer dem Sensor 102 zugeordneten Messeinrichtung und einer mit dieser gekoppelten Steuerungseinrichtung für die Sensorhalterung 201, 401, wobei das Sensorgehäuse auf seiner in Detektionsrichtung des Sensors 102 befindlichen Seite eine für den Sensor 102 signaldurchlässige Abdeckung 106, 301 aufweist und wobei der Erfassungsbereich 108, 109 des Sensors 102 im Bereich der signaldurchlässigen Abdeckung 106, 301 eine geringere Ausdehnung besitzt als die signaldurchlässige Abdeckung 106, 301, wobei das Sensorsystem 200, 300, 400 dadurch gekennzeichnet ist, dass die Messeinrichtung derart ausgebildet ist, dass sie geeignet ist, im Erfassungsbereich des Sensors 102 zu überprüfen, ob und in welchem Abschnitt die signaldurchlässige Abdeckung 106, 301 einen Bereich mit verringerter Signaldurchlässigkeit 202 aufweist, wobei die Messeinrichtung mit der Steuerungseinrichtung in der Weise zusammenwirkt, dass die Steuerungseinrichtung die Position des Sensors 102 in der Weise verändern kann, dass der Bereich mit verringerter Signaldurchlässigkeit 202 außerhalb des Erfassungsbereichs 108, 109 des Sensors 102 liegt.

Nach einer zweiten Ausführungsform betrifft die Erfindung ein Sensorsystem nach Ausführungsform 1, dadurch gekennzeichnet, dass der Sensor 102 ausgewählt ist aus Radarsensoren, Lichtsensoren, insbesondere Lidar-Sensoren auf Basis von Lasern oder Leuchtdioden und Bilderfassungssensoren.

Nach einer dritten Ausführungsform betrifft die Erfindung ein Sensorsystem nach Ausführungsform 1 oder 2, dadurch gekennzeichnet, dass der Sensor 102 über eine Sendeeinrichtung und eine hiervon getrennte Empfangseinrichtung verfügt, wobei die Sendeeinrichtung und/ oder die Empfangseinrichtung an der bewegbaren Sensorhalterung 201, 401 befestigt ist oder die Sendeeinrichtung und die Empfangseinrichtung jeweils separat an bewegbaren Sensorhalterungen 201, 401 befestigt sind.

Nach einer vierten Ausführungsform betrifft die Erfindung ein Sensorsystem nach einer der vorstehenden Ausführungsformen, dadurch gekennzeichnet, dass die Sensorhalterung 201, 401 in alle Raumrichtungen verfahrbar, um sämtliche Achsen drehbar und/ oder kippbar ausgestaltet ist.

Nach einer fünften Ausführungsform betrifft die Erfindung ein Sensorsystem nach einer der vorstehenden Ausführungsformen, dadurch gekennzeichnet, dass der Sensorhalterung 201, 401 zu ihrer Bewegung wenigstens ein Elektromotor, ein piezoelektrisches Element, oder ein hydraulisches Element zugeordnet ist.

Nach einer sechsten Ausführungsform betrifft die Erfindung ein Sensorsystem nach einer der vorstehenden Ausführungsformen, dadurch gekennzeichnet, dass die Sensorhalterung 201, 401 am Sensorgehäuse fixiert ist, insbesondere auf der der signaldurchlässigen Abdeckung 106, 301 gegenüberliegenden Fläche des Sensorgehäuses.

Nach einer siebten Ausführungsform betrifft die Erfindung ein Sensorsystem nach einer der vorstehenden Ausführungsformen, dadurch gekennzeichnet, dass die Prüfung, ob und in welchem Abschnitt die signaldurchlässige Abdeckung 106, 301 einen Bereich mit verringerter Signaldurchlässigkeit 202 aufweist, mittels einer der Messeinrichtung zugeordneten Recheneinheit durchführbar ist.

Nach einer achten Ausführungsform betrifft die Erfindung ein Sensorsystem nach Ausführungsform 7, dadurch gekennzeichnet, dass die Recheneinheit mit einem Datenverarbeitungsprogramm betreibbar ist, mittels welchem die Prüfung, ob und in welchem Abschnitt die signaldurchlässige Abdeckung 106, 301 einen Bereich mit verringerter Signaldurchlässigkeit 202 aufweist, über eine Differenzbilderkennung unter Einsatz desselben Sensors 102 oder verschiedener Sensoren vorgenommen wird, wobei bei Einsatz verschiedener Sensoren insbesondere eine Sensorfusion eingesetzt wird.

Nach einer neunten Ausführungsform betrifft die Erfindung ein Sensorsystem nach einer der vorstehenden Ausführungsformen, dadurch gekennzeichnet, dass die Messeinrichtung und die Steuerungseinrichtung unabhängig voneinander innerhalb oder außerhalb des Sensorgehäuses positioniert sind.

Nach einer zehnten Ausführungsform betrifft die Erfindung ein Sensorsystem nach einer der vorstehenden Ausführungsformen, dadurch gekennzeichnet, dass die Messeinrichtung so ausgestaltet ist, dass diese ein Fehlersignal ausgeben kann, für den Fall, dass die Position des Sensors 102 nicht in der Weise veränderbar ist, dass der Bereich mit verringerter Signaldurchlässigkeit 202 außerhalb des Erfassungsbereichs 108, 109 des Sensors 102 liegt.

Nach einer elften Ausführungsform betrifft die Erfindung ein Sensorsystem nach einer der vorstehenden Ausführungsformen, dadurch gekennzeichnet, dass das Sensorsystem 200, 300, 400 derart ausgestaltet ist, dass die Prüfung, ob und in welchem Abschnitt die signaldurchlässige Abdeckung 106, 301 einen Bereich mit verringerter Signaldurchlässigkeit 202 aufweist, beim Einschalten des Sensorsystems 200, 300, 400 und /oder in frei wählbaren zeitlichen Intervallen durchführbar ist.

Nach einer zwölften Ausführungsform betrifft die Erfindung ein Sensorsystem nach einer der vorstehenden Ausführungsformen, dadurch gekennzeichnet, dass zwischen dem Sensor 102 und der signaldurchlässigen Abdeckung 106, 301 eine signaldurchlässige innere Schutzabdeckung 302 vorgesehen ist, welche sich vorzugsweise bis an die seitlichen Innenwände der Gehäuseabdeckung erstreckt.

Nach einer dreizehnten Ausführungsform betrifft die Erfindung ein Sensorsystem nach einer der vorstehenden Ausführungsformen, dadurch gekennzeichnet, dass die signaldurchlässige Abdeckung 106, 301 und/ oder die signaldurchlässige innere Schutzabdeckung 302 aus einem transparenten Kunststoff oder Glas aufgebaut sind, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen, wobei der transparente Kunststoff vorzugsweise Polycarbonat oder Polymethylmethacrylat ist.

Nach einer vierzehnten Ausführungsform betrifft die Erfindung ein Verfahren zum Betreiben eines Sensorsystems 200, 300, 400 für ein Kraftfahrzeug umfassend ein Sensorgehäuse und einen darin angeordneten und an einer bewegbaren Sensorhalterung 201, 401 gehaltenen aktiven oder passiven Sensor 102 mit einer auf Strahlungsdetektion beruhenden Sensorik sowie einer dem Sensor 102 zugeordneten Messeinrichtung und einer mit dieser gekoppelten Steuerungseinrichtung für die Sensorhalterung 201, 401, wobei das Sensorgehäuse auf seiner in Detektionsrichtung des Sensors 102 befindlichen Seite eine für den Sensor 102 signaldurchlässige Abdeckung 106, 301 aufweist und wobei der Erfassungsbereich 108, 109 des Sensors 102 im Bereich der signaldurchlässigen Abdeckung 106, 301 eine geringere Ausdehnung besitzt als die signaldurchlässige Abdeckung 106, 301, wobei das Verfahren dadurch gekennzeichnet ist, dass mittels der Messeinrichtung geprüft wird, ob und in welchem Abschnitt des Erfassungsbereichs 108, 109 des Sensors 102 die signaldurchlässige Abdeckung 106, 301 einen Bereich mit verringerter Signaldurchlässigkeit 202 aufweist, und falls ein Bereich mit verringerter Signaldurchlässigkeit 202 detektiert wird, die Position des Sensors 102 mittels der Steuerungseinrichtung in der Weise verändert wird, dass der Bereich mit verringerter Signaldurchlässigkeit 202 außerhalb des Erfassungsbereichs 108, 109 des Sensors 102 liegt.

Nach einer fünfzehnten Ausführungsform betrifft die Erfindung ein Verfahren nach Ausführungsform 14, dadurch gekennzeichnet, dass ein Bereich mit verringerter Signaldurchlässigkeit 202 dadurch definiert ist, dass in einer zusammenhängenden Fläche von wenigstens 1 % des Erfassungsbereichs 108, 109 des Sensors 102 auf der signaldurchlässigen Abdeckung 106, 301 eine Dämpfung des über die Sensorik zu detektierenden Signals von wenigstens 5 %, verglichen mit der übrigen Fläche der signaldurchlässigen Abdeckung 106, 301 im Erfassungsbereich 108, 109 des Sensors 102, auftritt.

Nach einer sechzehnten Ausführungsform betrifft die Erfindung ein Fahrzeug, insbesondere Kraftfahrzeug, das mit wenigstens einem Sensorsystem 200, 300, 400 nach einem der Ausführungsformen 1 bis 13 ausgerüstet ist.

Die Erfindung wird im Folgenden anhand der Fign. 1 bis 4b näher erläutert. Darin zeigt
Fig. 1 einen schematischen Sensoraufbau nach dem Stand der Technik;
Fig. 2 einen erfindungsgemäßen Sensor mit Verschiebeeinrichtung in zwei Positionen, (2a) gestörtes Sensorsignal, (2b) ungestörtes Sensorsignal nach Korrektur der Position von Sender und Empfänger;
Fig. 3 eine weitere erfindungsgemäße Ausführungsform wie in Fig. 2 mit zwei signaldurchlässigen Abdeckungen, sowie
**Fig.4****:** eine weitere erfindungsgemäße Ausführungsform mit Rotationseinrichtung in zwei Positionen, (4a) gestörtes Sensorsignal, (4b) ungestörtes Sensorsignal nach Rotation von Sender und Empfänger.

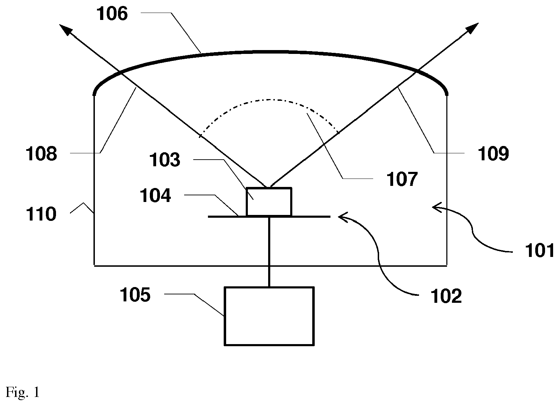

In Fig. 1 ist ein Sensorsystem 101 für ein Kraftfahrzeug schematisch in seitlicher Schnittdarstellung abgebildet. Bei dem Sensorsystem 101 handelt es sich um einen Einparksensor. Das Sensorsystem 101 umfasst ein Sensorgehäuse 110 und einen darin angeordneten Sensor 102 aus einem Sender 103 und Empfänger 104 mit einem Erfassungswinkel 107, der durch den Erfassungsbereich 108, 109 definiert ist. Der Sensor 102 ist vorliegend als Lidarsensor ausgestaltet. Dem Sensor 102 ist eine Messeinrichtung 105 zur Verarbeitung der Sensorsignale zugeordnet. Das Sensorgehäuse 110 weist auf seiner in Detektionsrichtung des Sensors befindlichen Seite eine für den Sensor 102 signaldurchlässige Abdeckung 106 auf.

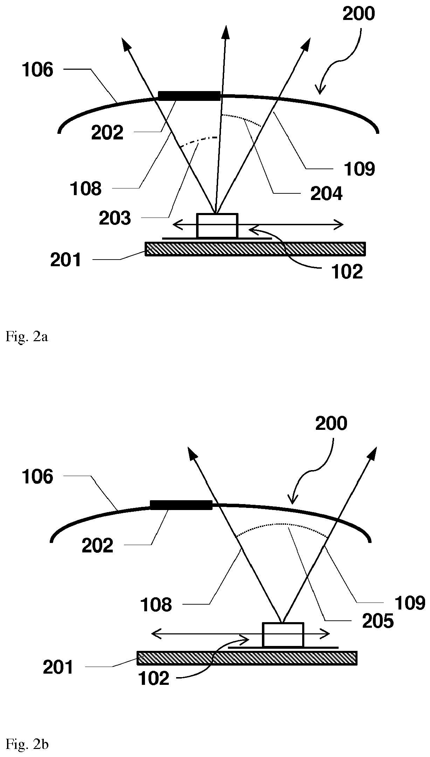

In Fig. 2a ist ein erfindungsgemäßes Sensorsystem 200 abgebildet. Bei diesem ist eine horizontal verfahrbare Sensorhalterung 201 vorgesehen, mit welcher die Position des Sensors 102 flächenparallel zur Rückwand des Sensorsystems 200 verändert werden kann, sobald auf der signaldurchlässigen Abdeckung 106 eine signalbeeinträchtigende Beschädigung 202 festgestellt wird, die einen ersten Teilabschnitt 203 des Erfassungsbereichs 108, 109 des Sensors 102 beeinträchtigt, sodass der Sensor 102 nur noch in einem zweiten Teilabschnitt 204 Signale versenden bzw. empfangen kann. In Fig. 2b ist das Sensorsystem 200 aus Fig. 2a dargestellt, nachdem der Sensor 102 horizontal in einen solchen Bereich verfahren wurde, in welchem die Beschädigung 202 außerhalb des Erfassungsbereichs 108, 109 des Sensors 102 liegt und der Sensor 102 somit wieder über seinen gesamten Erfassungswinkel 205 funktionstüchtig ist.

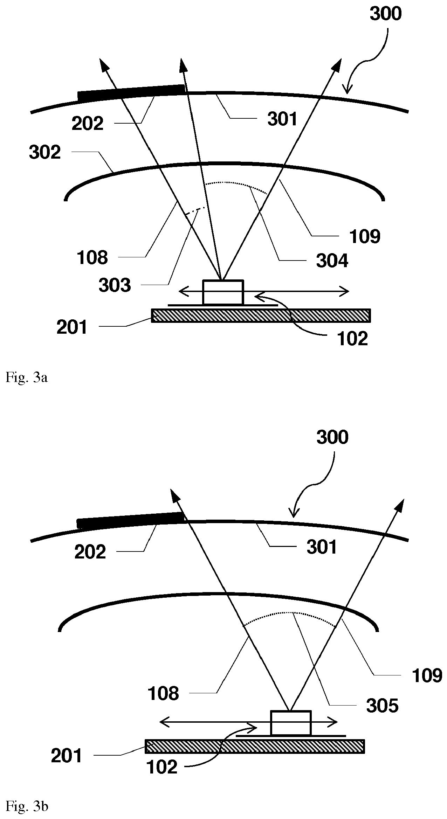

Fign. 3a und 3b zeigen eine Weiterbildung zu der in Fign. 2a und 2b dargestellten Ausführungsform. Der wesentliche Unterschied besteht darin, dass das hier gezeigte Sensorsystem 300 neben einer signaldurchlässigen Abdeckung 301 zusätzlich über eine signaldurchlässige innere Schutzabdeckung 302 verfügt, die jeweils aus Polycarbonat bestehen.

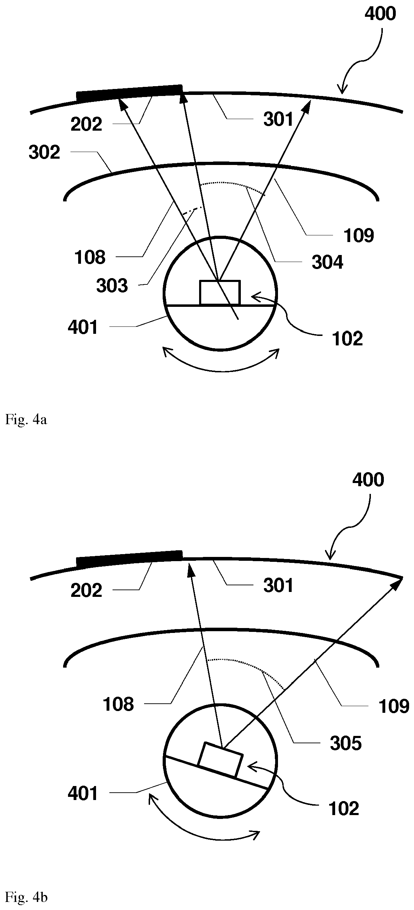

In den Fign. 4a und 4b ist eine weitere Ausführungsform des erfindungsgemäßen Sensorsystems 400 abgebildet. Auch das Sensorsystem 400 verfügt neben einer signaldurchlässigen Abdeckung 301 zusätzlich über eine signaldurchlässige innere Schutzabdeckung 302. Bei der hier gezeigten Ausgestaltung ist der Sensor 102 an einer als Rotationseinrichtung 401 ausgestalteten Sensorhalterung befestigt, mit welcher der Sensor 102 um eine oder zwei Raumachsen gekippt werden kann. Hierdurch kann im Falle des Auftretens einer Beschädigung 202 an der signaldurchlässigen Abdeckung 301 der Sensor 102 derart gekippt werden, dass sein Erfassungsbereich 108, 109 an der Beschädigung 202 vorbeigeführt und der Sensor 102 somit wieder über seinen gesamten Erfassungswinkel 305 funktionstüchtig ist.

### Bezugszeichenliste:

- 101: Sensorsystem (Stand der Technik)
- 102: Sensor
- 103: Sender
- 104: Empfänger
- 105: Messeinrichtung
- 106: signaldurchlässige Abdeckung
- 107: Erfassungswinkel
- 108: Erfassungsbereich
- 109: Erfassungsbereich
- 110: Sensorgehäuse
- 200: Sensorsystem (Erfindung)
- 201: horizontal verfahrbare Sensorhalterung
- 202: signalbeeinträchtigende Beschädigung
- 203: erster Teilabschnitt
- 204: zweiter Teilabschnitt
- 205: Erfassungswinkel
- 300: Sensorsystem (Erfindung)
- 301: signaldurchlässige Abdeckung
- 302: signaldurchlässige innere Schutzabdeckung
- 305: Erfassungswinkel
- 400: Sensorsystem (Erfindung)
- 401: als Rotationseinrichtung ausgestaltete Sensorhalterung

## Patentansprüche

1. Sensorsystem (200, 300, 400) für ein Fahrzeug, insbesondere Kraftfahrzeug, umfassend ein Sensorgehäuse und einen darin angeordneten und an einer bewegbaren Sensorhalterung (201, 401) gehaltenen aktiven oder passiven Sensor (102) mit einer auf Strahlungswellendetektion beruhenden Sensorik sowie einer dem Sensor (102) zugeordneten Messeinrichtung und einer mit dieser gekoppelten Steuerungseinrichtung für die Sensorhalterung (201, 401), wobei das Sensorgehäuse auf seiner in Detektionsrichtung des Sensors (102) befindlichen Seite eine für den Sensor (102) signaldurchlässige Abdeckung (106, 301) aufweist und wobei der Erfassungsbereich (108, 109) des Sensors (102) im Bereich der signaldurchlässigen Abdeckung (106, 301) eine geringere Ausdehnung besitzt als die signaldurchlässige Abdeckung (106, 301),
**dadurch gekennzeichnet, dass**
die Messeinrichtung derart ausgebildet ist, dass sie geeignet ist, im Erfassungsbereich des Sensors (102) zu überprüfen, ob und in welchem Abschnitt die signaldurchlässige Abdeckung (106, 301) einen Bereich mit verringerter Signaldurchlässigkeit (202) aufweist, wobei die Messeinrichtung mit der Steuerungseinrichtung in der Weise zusammenwirkt, dass die Steuerungseinrichtung die Position des Sensors (102) in der Weise verändern kann, dass der Bereich mit verringerter Signaldurchlässigkeit (202) außerhalb des Erfassungsbereichs (108, 109) des Sensors (102) liegt.

2. Sensorsystem nach Anspruch 1, **dadurch gekennzeichnet, dass** der Sensor (102) ausgewählt ist aus Radarsensoren, Lichtsensoren, insbesondere Lidar-Sensoren auf Basis von Lasern oder Leuchtdioden und Bilderfassungssensoren.

3. Sensorsystem nach Anspruch 1 oder 2, **dadurch gekennzeichnet, dass** der Sensor (102) über eine Sendeeinrichtung und eine hiervon getrennte Empfangseinrichtung verfügt, wobei die Sendeeinrichtung und/ oder die Empfangseinrichtung an der bewegbaren Sensorhalterung (201, 401) befestigt ist oder die Sendeeinrichtung und die Empfangseinrichtung jeweils separat an bewegbaren Sensorhalterungen (201, 401) befestigt sind.

4. Sensorsystem nach einem der vorstehenden Ansprüche, **dadurch gekennzeichnet, dass** die Sensorhalterung (201, 401) in alle Raumrichtungen verfahrbar, um sämtliche Achsen drehbar und/ oder kippbar ausgestaltet ist.

5. Sensorsystem nach einem der vorstehenden Ansprüche, **dadurch gekennzeichnet, dass** der Sensorhalterung (201, 401) zu ihrer Bewegung wenigstens ein Elektromotor, ein piezoelektrisches Element, oder ein hydraulisches Element zugeordnet ist.

6. Sensorsystem nach einem der vorstehenden Ansprüche, **dadurch gekennzeichnet, dass** die Sensorhalterung (201, 401) am Sensorgehäuse fixiert ist, insbesondere auf der der signaldurchlässigen Abdeckung (106, 301) gegenüberliegenden Fläche des Sensorgehäuses.

7. Sensorsystem nach einem der vorstehenden Ansprüche, **dadurch gekennzeichnet, dass** die Prüfung, ob und in welchem Abschnitt die signaldurchlässige Abdeckung (106, 301) einen Bereich mit verringerter Signaldurchlässigkeit (202) aufweist, mittels einer der Messeinrichtung zugeordneten Recheneinheit durchführbar ist, wobei die Recheneinheit insbesondere mit einem Datenverarbeitungsprogramm betreibbar ist, mittels welchem die Prüfung, ob und in welchem Abschnitt die signaldurchlässige Abdeckung (106, 301) einen Bereich mit verringerter Signaldurchlässigkeit (202) aufweist, über eine Differenzbilderkennung unter Einsatz desselben Sensors (102) oder verschiedener Sensoren vorgenommen wird, wobei bei Einsatz verschiedener Sensoren vorzugsweise eine Sensorfusion eingesetzt wird.

8. Sensorsystem nach einem der vorstehenden Ansprüche, **dadurch gekennzeichnet, dass** die Messeinrichtung und die Steuerungseinrichtung unabhängig voneinander innerhalb oder außerhalb des Sensorgehäuses positioniert sind.

9. Sensorsystem nach einem der vorstehenden Ansprüche, **dadurch gekennzeichnet, dass** die Messeinrichtung so ausgestaltet ist, dass diese ein Fehlersignal ausgeben kann, für den Fall, dass die Position des Sensors (102) nicht in der Weise veränderbar ist, dass der Bereich mit verringerter Signaldurchlässigkeit (202) außerhalb des Erfassungsbereichs (108, 109) des Sensors (102) liegt.

10. Sensorsystem nach einem der vorstehenden Ansprüche, **dadurch gekennzeichnet, dass** das Sensorsystem (200, 300, 400) derart ausgestaltet ist, dass die Prüfung, ob und in welchem Abschnitt die signaldurchlässige Abdeckung (106, 301) einen Bereich mit verringerter Signaldurchlässigkeit (202) aufweist, beim Einschalten des Sensorsystems (200, 300, 400) und /oder in frei wählbaren zeitlichen Intervallen durchführbar ist.

11. Sensorsystem nach einem der vorstehenden Ansprüche, **dadurch gekennzeichnet, dass** zwischen dem Sensor (102) und der signaldurchlässigen Abdeckung (106, 301) eine signaldurchlässige innere Schutzabdeckung (302) vorgesehen ist, welche sich vorzugsweise bis an die seitlichen Innenwände der Gehäuseabdeckung erstreckt.

12. Sensorsystem nach einem der vorstehenden Ansprüche, **dadurch gekennzeichnet, dass** die signaldurchlässige Abdeckung (106, 301) und/ oder die signaldurchlässige innere Schutzabdeckung (302) aus einem transparenten Kunststoff oder Glas aufgebaut sind, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen, wobei der transparente Kunststoff vorzugsweise Polycarbonat oder Polymethylmethacrylat ist.

13. Verfahren zum Betreiben eines Sensorsystems (200, 300, 400) für ein Kraftfahrzeug umfassend ein Sensorgehäuse und einen darin angeordneten und an einer bewegbaren Sensorhalterung (201, 401) gehaltenen aktiven oder passiven Sensor (102) mit einer auf Strahlungsdetektion beruhenden Sensorik sowie einer dem Sensor (102) zugeordneten Messeinrichtung und einer mit dieser gekoppelten Steuerungseinrichtung für die Sensorhalterung (201, 401), wobei das Sensorgehäuse auf seiner in Detektionsrichtung des Sensors (102) befindlichen Seite eine für den Sensor (102) signaldurchlässige Abdeckung (106, 301) aufweist und wobei der Erfassungsbereich (108, 109) des Sensors (102) im Bereich der signaldurchlässigen Abdeckung (106, 301) eine geringere Ausdehnung besitzt als die signaldurchlässige Abdeckung (106, 301),
**dadurch gekennzeichnet, dass**
mittels der Messeinrichtung geprüft wird, ob und in welchem Abschnitt des Erfassungsbereichs (108, 109) des Sensors (102) die signaldurchlässige Abdeckung (106, 301) einen Bereich mit verringerter Signaldurchlässigkeit (202) aufweist, und falls ein Bereich mit verringerter Signaldurchlässigkeit (202) detektiert wird, die Position des Sensors (102) mittels der Steuerungseinrichtung in der Weise verändert wird, dass der Bereich mit verringerter Signaldurchlässigkeit (202) außerhalb des Erfassungsbereichs (108, 109) des Sensors (102) liegt.

14. Verfahren nach Anspruch 13, **dadurch gekennzeichnet, dass** ein Bereich mit verringerter Signaldurchlässigkeit (202) dadurch definiert ist, dass in einer zusammenhängenden Fläche von wenigstens 1 % des Erfassungsbereichs (108, 109) des Sensors (102) auf der signaldurchlässigen Abdeckung (106, 301) eine Dämpfung des über die Sensorik zu detektierenden Signals von wenigstens 5 %, verglichen mit der übrigen Fläche der signaldurchlässigen Abdeckung (106, 301) im Erfassungsbereich (108, 109) des Sensors (102), auftritt.

15. Fahrzeug, insbesondere Kraftfahrzeug, das mit wenigstens einem Sensorsystem (200, 300, 400) nach einem der Ansprüche 1 bis 12 ausgerüstet ist.
